(19) Europäisches Patentamt / European Patent Office / Office européen des brevets

(11) **EP 2 867 976 B1**

(12) **EUROPEAN PATENT SPECIFICATION**

(45) Date of publication and mention
of the grant of the patent:
**24.08.2016  Bulletin 2016/34**

(21) Application number: **13737108.4**

(22) Date of filing: **02.07.2013**

(51) Int Cl.:
*H01F 3/14* (2006.01)    *H02J 7/00* (2006.01)
*H04R 25/00* (2006.01)    *H01F 38/14* (2006.01)
*H02J 7/02* (2006.01)

(86) International application number:
**PCT/US2013/049170**

(87) International publication number:
**WO 2014/008317 (09.01.2014 Gazette 2014/02)**

(54) **MINIATURE LOW-POWER REMOTE BATTERY CHARGING SYSTEMS AND METHODS**

MINI-FERNBATTERIELADESYSTEME MIT NIEDRIGEM LEISTUNGSVERBRAUCH UND
VERFAHREN

SYSTÈMES ET PROCÉDÉS DE CHARGE À DISTANCE DE BATTERIE MINIATURE DE FAIBLE
PUISSANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **02.07.2012   US 201261666969 P**

(43) Date of publication of application:
**06.05.2015   Bulletin 2015/19**

(73) Proprietor: **Resonate Industries, Inc.
Westlake Village, CA 91361 (US)**

(72) Inventors:
• **VORPERIAN, Vatche
  Irvine, CA 92603 (US)**
• **ALKALAI, Leon
  Studio City, CA 91604 (US)**
• **HUNTER, Donald
  La Verne, CA 91750 (US)**
• **LI, Du
  Oak Park, CA 91377 (US)**
• **LOTAN, Noam
  Thousand Oaks, CA 91320 (US)**

(74) Representative: **Käck, Stefan et al
Kahler Käck Mollekopf
Vorderer Anger 239
86899 Landsberg am Lech (DE)**

(56) References cited:
**EP-A1- 2 375 534        EP-A2- 2 093 857
WO-A1-2009/100981        WO-A1-2011/031233
DE-B3-102009 033 898     US-A1- 2009 278 505**

**Description**

**BACKGROUND**

The disclosure is related to wireless charging of rechargeable batteries of miniature devices such as hearing aids, and in particular to wireless power transmission using high-frequency resonant power conversion techniques.

Wireless transmission of low power, of the order of a few milliwatts, into miniature devices such as hearing aids, of the order of several millimeters across and tall, faces particular constraints. In particular, wireless charging may be particularly difficult under such tight spatial constraints if the primary and secondary inductors are loosely-coupled, for example through an air gap rather than a common core, and if the relative positioning of the primary and secondary inductors is not precisely fixed.

For example, European Patent Application EP 2 375 534 A1 proposes an inductive coupling system for wireless (contactless) charging of a rechargeable hearing instrument. The system comprises a charger having a primary coil characterized by a U-shaped primary ferrite core, and a hearing instrument device having a secondary coil with a ferrite rod core.

European Patent Application EP 2 093 857 A2 describes a non-contact power charging system and a control method thereof, in which power transmission can be interrupted when foreign materials are deposited on a charge plate of the non-contact power charging system. A charging operation can be continuously maintained at a stable voltage even if a non-contact power receiving apparatus moves by touching or displacement on the charge plate of the non-contact power charging system in the charging operation.

**DESCRIPTION OF THE DRAWINGS**

Fig. **1-A** shows an exemplary hearing aid according to some embodiments of the present invention.

Fig. **1-B** shows an exemplary hearing aid battery charger according to some embodiments of the present invention.

Fig. **1-C** shows an exemplary system comprising a hearing aid placed within a charger according to some embodiments of the present invention.

Fig. **2-A** shows an exemplary battery configuration within a hearing aid with the battery negative terminal facing a receiver inductor, according to some embodiments of the present invention.

Fig. **2-B** shows an exemplary battery configuration within a hearing aid with the battery positive terminal facing a receiver inductor, according to some embodiments of the present invention.

Figs. **3-A-B** show exploded isometric and top plan views, respectively, of a multilayer PCB receiver inductor according to some embodiments of the present invention.

Fig. **4** shows an isometric view of an exemplary printed circuit board supporting receiver charging electronic components according to some embodiments of the present invention.

Fig. **5-A** shows a circuit diagram of an exemplary charging circuit.

Fig. **5-B** shows a circuit diagram of an exemplary primary charging circuit.

Fig. **5-C** shows a circuit diagram of an exemplary secondary charging circuit.

Figs. **6-A-B** show top and side views, respectively, of a wireless charging system suitable for simultaneously charging two hearing aids, according to some embodiments of the present invention.

Fig. **7** shows an exemplary dual-hearing aid charging system having rounded field-shaping lateral protrusions according to some embodiments of the present invention.

## SUMMARY

The invention is defined in claims 1 and 12, respectively. Particular embodiments are set out in the dependent claims.

According to one example, a system comprises a remote battery charger comprising a transmitter inductor electrically connected to an external power source, and a hearing aid removably situated within a charging chamber of the remote battery charger. The hearing aid comprising a rechargeable hearing aid battery body and a receiver inductor electrically connected to the battery body. The receiver inductor is inductively coupled to the transmitter inductor through a generally-longitudinal air gap. The battery body is disposed opposite the transmitter inductor relative to the receiver inductor. The remote battery charger comprises a set of lateral field-shaping protrusions disposed laterally with respect to the receiver inductor.

The field-shaping protrusions direct a charging magnetic field generated by the transmitter inductor away from a central axis of the battery body so as to decrease an inductive coupling of the transmitter inductor to the battery body.

According to another example, a method comprises removably placing a hearing aid inside a charging chamber of a remote battery charger, the charger comprising a transmitter inductor electrically connected to an external power source, the hearing aid comprising a rechargeable hearing aid battery body and a receiver inductor electrically connected to the battery body, the receiver inductor being inductively coupled to the transmitter inductor through a generally-longitudinal air gap, the battery body being disposed opposite the transmitter inductor relative to the receiver inductor; and charging the rechargeable battery by inductively coupling energy from the transmitter inductor to the receiver inductor. The remote battery charger comprises a set of lateral field-shaping protrusions disposed laterally with respect to the receiver inductor, the field-shaping protrusions directing a charging magnetic field generated by the transmitter inductor away from a central axis of the transmitter inductor so as to decrease an inductive coupling of the transmitter inductor to the battery body.

According to another example, a system comprises a remote battery charger comprising a transmitter inductor electrically connected to an external power source; a rechargeable battery body situated within a charging chamber of the remote battery charger; and a receiver inductor electrically connected to the battery body and situated between the transmitter inductor and the battery body, the receiver inductor being inductively coupled to the transmitter inductor through a generally-longitudinal air gap. The remote battery charger comprises a set of lateral field-shaping protrusions disposed laterally with respect to the receiver inductor, the field-shaping protrusions directing a charging magnetic field generated by the transmitter inductor away from a central axis of the transmitter inductor so as to decrease an inductive coupling of the transmitter inductor to the battery body.

According to another example, a method comprises placing a rechargeable battery body within a charging chamber of a remote battery charger, the remote battery charger comprising a transmitter inductor electrically connected to an external power source, the battery body being electrically connected to a receiver inductor situated between the transmitter inductor and the battery body, the receiver inductor being inductively coupled to the transmitter inductor through a generally-longitudinal air gap; and charging the rechargeable battery by inductively coupling energy from the transmitter inductor to the receiver inductor. The remote battery charger comprises a set of lateral field-shaping protrusions disposed laterally with respect to the receiver inductor, the field-shaping protrusions directing a charging magnetic field generated by the transmitter inductor away from a central axis of the transmitter inductor so as to decrease an inductive coupling of the transmitter inductor to the battery body.

According to another example, a remote hearing-aid battery charging system comprises a charging chamber sized to receive a hearing aid for recharging a battery of the hearing aid; and a transmitter inductor configured to emit a radio-frequency charging magnetic field along a generally longitudinal direction through an air gap between the transmitter inductor and a location of a receiver inductor electrically connected to the battery. The charging chamber comprises a set of lateral field-shaping protrusions disposed laterally with respect to the transmitter inductor, the field-shaping protrusions directing the charging magnetic field generated by the transmitter inductor away from a central axis of the transmitter inductor so as to decrease an inductive coupling of the transmitter inductor to the battery.

## DESCRIPTION OF EXEMPLARY EMBODIMENTS

The following description illustrates the present invention by way of example and not necessarily by way of limitation. Any reference to an element is understood to refer to at least one element. A set of elements is understood to include one or more elements. A plurality of elements includes at least two elements. Any recited connection is understood to encompass a direct operative connection or an indirect operative connection through intermediary structure(s). The terms "electronic battery" and "dynamic battery" are used to refer to batteries including a battery body (battery cell) integrated together with a charging circuit in a battery-sized structure. Unless otherwise specified, the term "battery" encompasses both electronic batteries and conventional batteries (i.e. battery cells not integrated with a charging circuit).

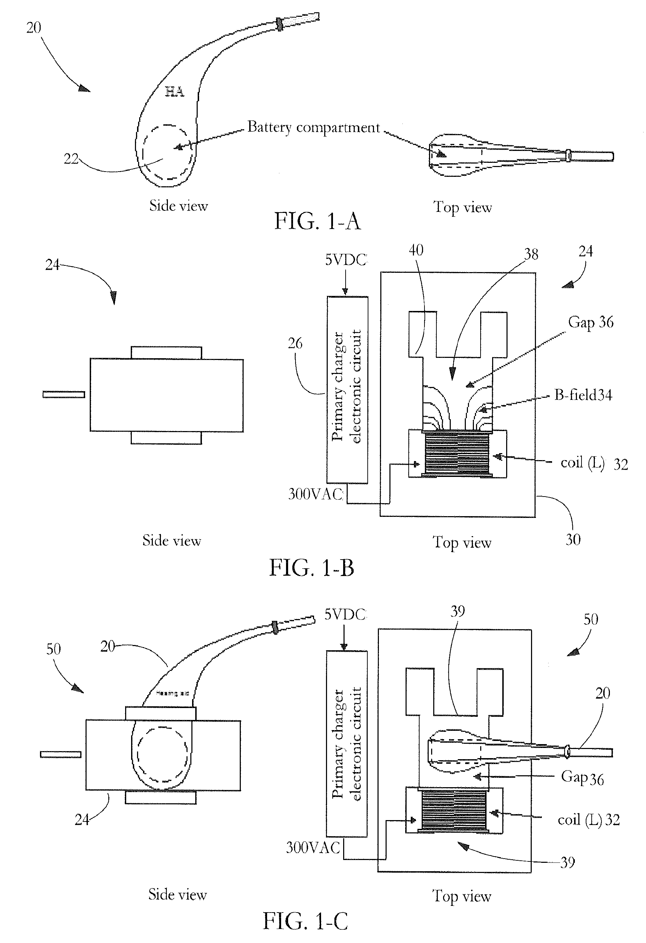

Fig. **1-A** shows side and top views of an exemplary hearing aid **20** according to some embodiments of the present invention. Hearing aid **20** is sized to fit in a user's ear. Hearing aid **20** includes a battery compartment **22** configured to receive a rechargeable battery which can be charged wirelessly while situated within hearing aid **20,** as described below.

In some embodiments, the rechargeable battery is an electronic (dynamic) battery including a conventional battery body integrated together with a charging circuit including a receiver inductor. Such a rechargeable electronic battery may be sized as a standard-size zinc-air battery commonly used for hearing aids. In some embodiments, the rechargeable battery may be a conventional (non-electronic) battery electrically connected to a charging circuit (e.g. a charging circuit separately provided as part of the hearing aid), but not physically integrated with the charging circuit into a standard battery-sized structure.

Fig. **1-B** shows side and top views of a wireless battery charger **24** suitable for receiving a hearing aid to wirelessly charge the hearing aid battery situated within the hearing aid, according to some embodiments of the present invention. Fig. **1-C** shows a charging system **50** formed by placing hearing aid **20** within charger **24.**

As shown in Fig. **1-B,** charger **24** includes a charging body **30** enclosing a charging chamber **38.** Charging body **30** may form a magnetic core, which is inductively coupled to a primary inductor (coil) **32.** Charging body/magnetic core **30** may be formed from a conductive, magnetic material such as ferrite. A lower longitudinal conductive protrusion (leg) **39** defined within charging chamber **38** forms a magnetic core of primary inductor **32,** while an oppositely-facing longitudinal protrusion (leg) **39** limits the size of charging chamber **38.**

A primary charger electronic circuit **26** is electrically connected to an external power source (e.g. a transformer drawing power from the electrical grid or a car battery), and to a primary (transmitter) charging inductor (coil) **32** situated within charging chamber **38.** Primary inductor **32** generates a radio-frequency (RF) charging magnetic field **34** extending in a generally-longitudinal direction (vertical in Figs. **1-B-C**), within an air gap **36** defined between primary inductor **32** and hearing aid **20.** The alternating charging magnetic field may have a frequency on the order of 100 kHz, for example about 120 kHz.

A set of one or more lateral conductive field-shaping protrusions (legs) **40** protrude laterally within charging chamber **38,** and serve as poles directing the charging magnetic field away from a central axis primary inductor **32** (which coincides with a central axis of a battery body inserted within charging chamber **38**), so as to decrease an inductive coupling of primary inductor **32** to the battery body. Field-shaping protrusions **40** are disposed laterally with respect to the receiver inductor connected to the battery situated within charging chamber **38.** In the exemplary configuration of Fig. **1-B,** two oppositely-facing field-shaping protrusions **40** are used; in some embodiments, one or more than two lateral field-shaping protrusions may be used. Field-shaping protrusions **40** protrude inside relative to the portion of the side wall of charging chamber **38** along primary inductor **32.** In some embodiments the lateral extent of field-shaping protrusions **40** may be on the order of mm, for example about 1-10 mm, as measured from the side of wall of charging chamber **38** along primary inductor **32.** In some embodiments, the lateral extent of field-shaping protrusions **40** extending over primary inductor **32** may be on the order of a few mm, e.g. 1-2 mm.

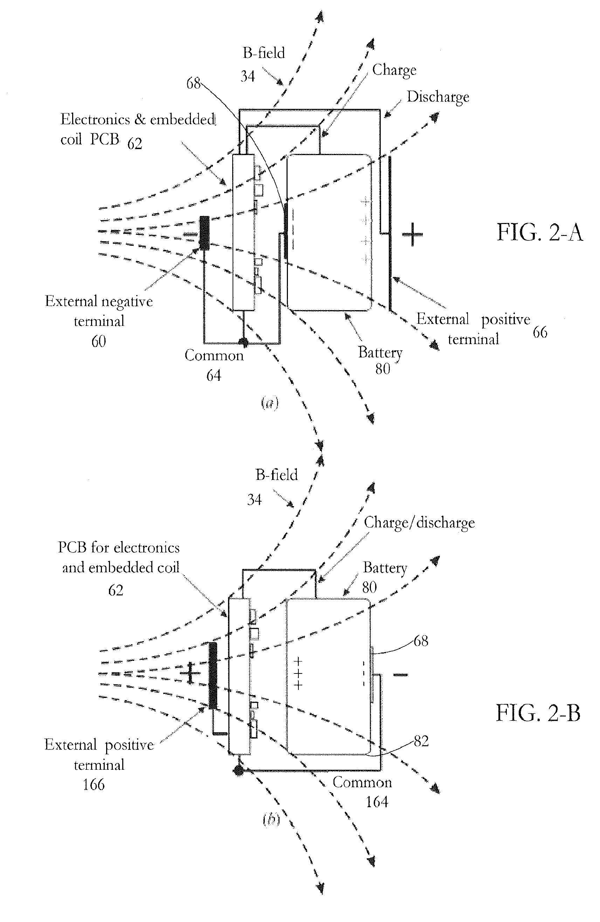

Fig. **2-A** shows an exemplary battery configuration within a hearing aid with the battery negative terminal facing a receiver inductor, according to some embodiments of the present invention. A battery (battery body) **80** is electrically connected to a charging circuit **62** which includes a receiver inductor (coil) and energy-harvesting circuit components mounted on a printed circuit board (PCB). As shown, battery body **80** is disposed opposite the transmitter inductor (the source of magnetic field **34**) relative to the receiver inductor of charging circuit **62.** Ideally, the charging magnetic field is mostly incident on (intercepted by) the receiver inductor, and only minimally incident on battery body **80,** so as to reduce an inductive heating of battery body **80.**

An external negative terminal **60** and an external positive terminal **66** are connected to the hearing aid circuitry, for powering the hearing aid. In some embodiments, external negative terminal **60** is at ground, while external positive terminal **66** is at 1.1 V, a voltage value used in legacy hearing aids. In some embodiments, the positive terminal of battery body **80** is at a different voltage (e.g. 4.2 V), and circuitry within charging circuit **82** down-converts the battery voltage to the needed external voltage. A negative battery contact **68** protrudes longitudinally from battery body **80.** In some embodiments, negative battery contact **68** is shaped like a button extending nearly to the edge of battery body **80,** and is surrounded by a rounded shoulder at the edge of battery body **80.**

In the arrangement of Fig. **2-A,** the battery negative terminal (the anode during battery operation) faces charging circuit **62** and its receiver inductor, and the battery positive terminal (the cathode during battery operation) faces away from the receiver inductor. The battery negative terminal is commonly connected with external negative terminal **60** to form a common node **64,** which may be at ground. External positive terminal **66** is connected to the positive terminal of battery body **80** through charging circuit **62.** In some embodiments, the external side of the printed circuit board supporting charging circuit **62** (the left side in Fig. **2-A**) is shaped to include a rounded shoulder and central protruding button sized to fit within a hearing aid cradle configured complementarily to receive a standard hearing aid battery.

Fig. **2-B** shows an exemplary battery configuration within a hearing aid with the battery positive terminal facing a receiver inductor, according to some embodiments of the present invention. The battery negative terminal **68** and external (hearing aid) negative terminal are commonly connected to form a common node **164,** which may be at ground. An external positive terminal **166** is connected to the hearing aid circuitry and to charging circuit **62**. Charging circuit **62** is further electrically connected to the positive terminal of battery body **80**.

In the configuration of Fig. **2-B**, the protruding battery negative terminal **68** and its surrounding rounded shoulder **82** can fit within a hearing aid cradle shaped complementarily so as to receive a conventional hearing aid battery.

In some embodiments, battery body **80** and charging circuit **62** are integrated together by a wrapping structure or assembly to form a standard-sized removable electronic battery. For example, a size 223 rechargeable Li-ion battery body may be mechanically integrated with a charging circuit PCB to form a size 13 lookalike Li-ion battery that can be placed in any hearing aid device. In some embodiments, charging circuit **62** may be fixed and provided as part of the hearing aid, and need not be physically (mechanically) integrated with removable battery body **80**.

In some embodiments, the power transferred into battery body **80** through the receiver inductor of charging circuit **62** is on the order of 10 mW, for example a few mW to tens of mW. In some embodiments, the power transferred from the transmitted inductor has a value between 100 mW and 1 W, for example a few hundreds of mW. In some embodiments, the charging field has a frequency on the order of 100 kHz, for example tens of kHz to hundreds of kHz, more particularly about 100 kHz to 150 kHz.

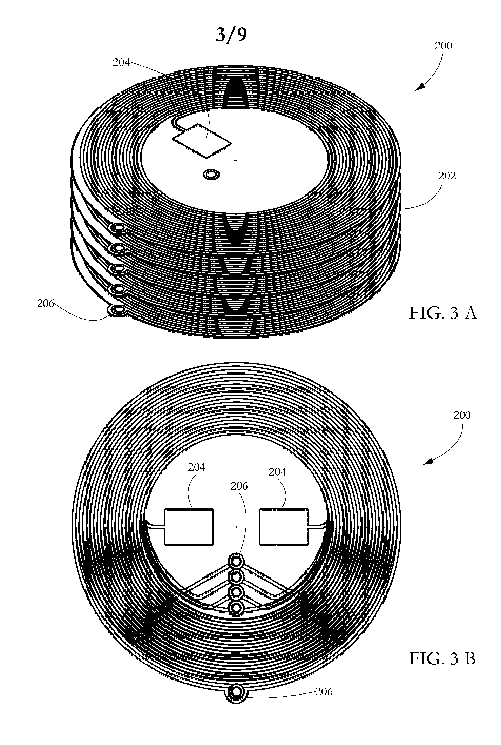

Figs. **3-A-B** show exploded isometric and top plan views, respectively, of a multilayer PCB receiver inductor (coil) **200** according to some embodiments of the present invention. Receiver inductor **200** includes a spiral conductive trace extending over multiple stacked layers **202**: a conductive spiral in each layer is connected to one or two spirals in adjacent layers (above and/or below) through conductive vias (inter-layer connectors). Receiver inductor **200** includes two coil terminals **204** defined at the opposite ends of the conductive trace, as well as a plurality of test terminals **206** defined along each of the stacked layers. Test terminals **206** may be used to test the integrity of segments of the conductive trace. In some embodiments, the inductance and equivalent series resistance of receiver inductor **200** are on the order of tens to hundreds of $\mu$H and tens to hundreds of $\Omega$, respectively (e.g. about 100$\mu$H and 60$\Omega$, respectively).

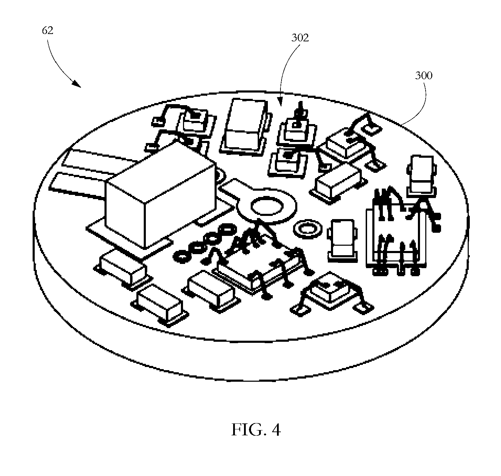

Fig. **4** shows an isometric view of an exemplary printed circuit board (PCB) **300** supporting receiver charging circuit **62** and its electronic components **302** according to some embodiments of the present invention. PCB **300** may include multiple layers, for example one layer supporting various electronic components **302** such as capacitors, resistors, and integrated circuits (chips), and a second layer incorporating a receiver inductor as shown in Figs. **3-A-B**.

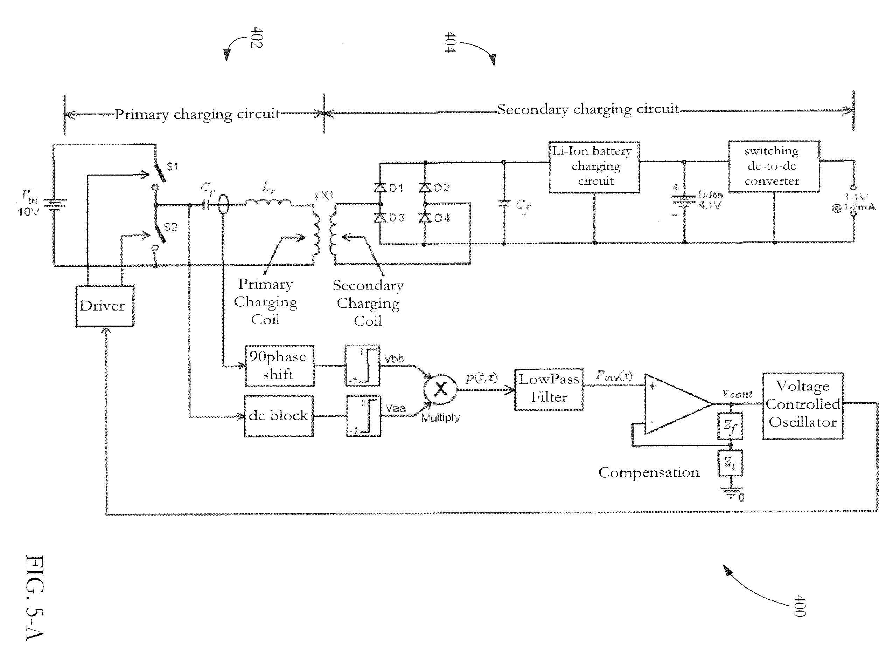

Fig. **5-A** shows a circuit diagram of an exemplary charging (transformer) circuit **400** according to some embodiments of the present invention. Charging circuit **400** includes a primary (transmitter) circuit **402** and a secondary (receiver) circuit **404**. Primary and secondary circuits **402, 404** are loosely-coupled inductively across an air gap as described above.

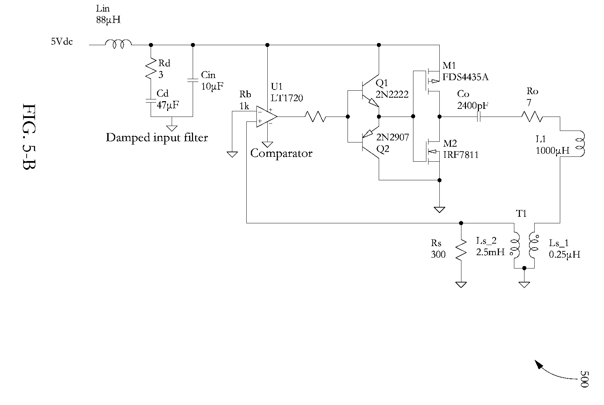

Fig. **5-B** shows a circuit diagram of an exemplary primary charging circuit **500** according to some embodiments of the present invention. Primary charging circuit **500** is used to generate a high-frequency charging magnetic field using a transmitter inductor $L_1$.

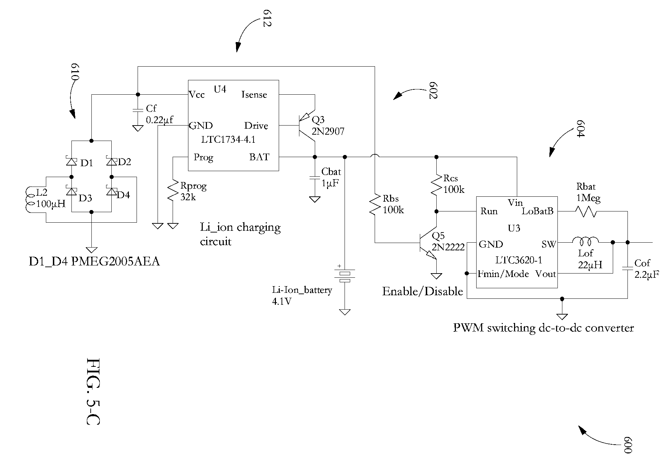

Fig. **5-C** shows a circuit diagram of an exemplary secondary (receiver) charging circuit **600** according to some embodiments of the present invention. Secondary charging circuit **600** uses a receiver inductor $L_2$ to receive the charging magnetic field generated by transmitter inductor $L_1$. A battery-charging circuit **602** charges the battery cell using the received energy. A dc-to-dc converter **604** converts between the voltages used by the battery cell and external hearing aid circuitry. Secondary charging circuit **600** and primary charging circuit **500** are separated by the physical gap between the loosely-coupled primary inductor $L_1$ and secondary inductor $L_2$.

In some embodiments, the voltage induced on the received inductor $L_2$ is applied to a full-wave rectifier **610** which produces a direct current 5-7 Vdc that powers a 4.1V or 4.2V Li-ion battery-charging control integrated circuit **612**. Converter **604** may include a switching dc-to-dc buck regulator which converts the battery voltage of 4.1 or 4.2 Vdc to 1.1 Vdc needed to operate a legacy hearing aid. Full-wave rectifier **610,** charging IC **612,** and dc-to-dc converter **604** and their associated components may be mounted on the same printed circuit board, as illustrated in Fig. **4**.

In some embodiments, the induced voltage across $L_2$ is applied to the full-wave bridge rectifier **610,** whose output in turn is applied to a lithium-ion battery charging integrated circuit **612,** which may be a LTC 1734-4.1 chip. The magnitude of the induced dc voltage is a function of the distance between $L_2$ and $L_1$ and the voltage applied to $L_1$, both of which may be adjusted empirically so that the output voltage of the full-wave rectifier bridge **610** does not exceed a predetermined value, e.g. 7 Vdc. Once the battery is fully charged, charging IC **612** may automatically shift from a fast charging rate to a low rate. The exemplary values of the components shown may be based on the manufacturer's specifications and may be adjusted empirically to produce a maximum safe charging current into the battery, e.g. approximately 2-3 mA. A dc-to-dc converter chip LT3620-1 is used to convert the battery voltage to 1.1 Vdc, which is the voltage needed to operate the hearing aid. The values of the inductor and capacitor at the output of the LT3620-1 may be those recommended by the manufacturer. In some embodiments, as long as the hearing aid is in the charging gap and a voltage is present at the output of the full-wave rectifier **610,** the shutdown pin on LT3620-1 is held low in order to prevent the dc-to-dc converter from operating. Once the hearing aid is taken out of the gap, the dc-to-dc converter becomes operational.

The operation of primary charger circuit **500** according to some embodiments may be better understood by considering the following description in conjunction with Fig. **5-B.** A pair of complementary MOSFETs ($M_1$ and $M_2$), driven symmetrically with 50% duty-cycle excite the resonant branch comprising $C_o$, and the loosely coupled inductors $L_1$ and $L_2$ with a unipolar pulse train of amplitude $V_{in}$. The resonant capacitor blocks the dc component of the input voltage, $V_{in}/2$, so that the resonant circuit is effectively excited by a symmetrical square wave, $v_e(t)$, of amplitude equal to $V_{in}/2$.

The resonant frequency is given by:

$$f_0 = \frac{1}{2\pi\sqrt{C_o L_\sigma}} \tag{1}$$

In Equation (1), $L_\sigma$ is the leakage inductance which is related to the self inductance of the primary charging coil, $L_1$, and secondary receiving coil, $L_2$, by the coupling coefficient, $k$, as:

$$L_\sigma = L_1\left(1 - k\sqrt{\frac{L_2}{L_1}}\right) \tag{2}$$

If $k << 1$ and $L_2 << L_1$, then $L_\sigma \approx L_1$, and consequently the resonant frequency is given to an excellent approximation by:

$$f_0 \approx \frac{1}{2\pi\sqrt{C_o L_1)}} \tag{3}$$

The coupling coefficient $k$, may inherently have a very small value if $L_2$ is physically much smaller than $L_1$ and the two do not share a common magnetic core. In fact as we have seen, $L_1$ may be an inductor with an air core. In some embodiments, the value of the coupling coefficient is on the order of 0.1, more particularly less than 0.2, more particularly approximately 0.1:

$$k \approx 0.1 \tag{4}$$

With such a low value of the coupling coefficient, power transfer to $L_2$ may become problematic because a high voltage must be applied to the primary coil in order to induce a small voltage on the secondary. For example, the ratio of the voltage at the output of $L_2$ to the voltage applied to $L_1$ using typical values is given by:

$$\frac{V_{L2}}{V_{L1}} = k\sqrt{\frac{L_2}{L_1}} = 0.1\sqrt{\frac{100\mu\mathrm{H}}{1000\mu\mathrm{H}}} = 0.0316 \tag{5}$$

To obtain the necessary high voltage on $L_1$ starting with a 5 Vdc source, $L_1$, $C_o$ and the MOSFETs $M_1$ and $M_2$ form a high-$Q$ resonant circuit which is excited at its resonant frequency. In order to ensure that the circuit is always excited at its resonance, a simple positive feedback loop may be implemented as shown in Figs. **5-A-B**. In this loop, the resonant current is sensed by the 1:100 transformer $T_1$ (Fig. **5-A**) and converted to a voltage across $R_s$ which is applied to a comparator referenced to ground (LT1720 in Fig. **5-A**). The comparator turns on $M_1$ and turns off $M_2$ each time the current turns positive and vice-versa when the current turns negative. This ensures sustained oscillations at the resonant frequency but does not guarantee that the circuit will start oscillating. If an antenna is placed at the positive pin of the comparator, the circuit will start oscillating by the slightest disturbance, such as power on, because of its high-$Q$.

The operation of the transformer circuit may be better understood by considering the following description of the equations for the resonant current and voltage in terms of the $Q$-factor of the resonant circuit.

The characteristic impedance, $Z_o$, and the $Q$-factor may be given by those of a simple series resonant circuit, $L_1$, $C_o$ and $R_o$ as follows:

$$Z_o = \sqrt{\frac{L_1}{C_o}} \qquad (6)$$

$$Q = \frac{Z_o}{R_o} \qquad (7)$$

In Eq. (7), $R_o$ represents the total losses in the resonant circuit which lower the Q-factor of the resonant tank. The factors contributing to $R_o$ are the winding resistance of the primary coil, $r_{L1}$, the equivalent series resistance, $r_{Co}$, of the resonant capacitor $C_o$, the on-resistance, $r_{DS}$, of the MOSFETs, $M_1$ and $M_2$, the core losses of the magnetics circuit, $r_{core}$, and the losses due to induction heating, $r_q$, of the electronic battery and the hearing aid. The induction heating losses may be particularly important because they are present only when the hearing aid is inserted in the charger. In fact, insertion of the hearing aid in the gap may cause the resonant current to drop by about 20-25%. When the resonant circuit is designed, the components of $R_o$ may be chosen so that the resultant resonant current, which produces the induction field, is sufficient to induce the necessary voltage across $L_2$ to charge the electronic battery. A Q-factor in the range 75-100 was obtained in an exemplary prototype implementation of a rechargeable battery system circuit as described above.

With a high Q-factor and the frequency of the pulse train $v_e(t)$ equal to the resonant frequency, the magnitude of the resonant current may be almost entirely determined by the fundamental component of $v_e(t)$ which is given by $2V_{in}/\pi$. Hence the resonant current may be given by:

$$I_o = I_p \sin(\omega_0 t) = \frac{V_{in}}{Z_o} \frac{2}{\pi} Q \sin(\omega_0 t) \qquad (8)$$

The resonant voltage, which appears across $L_1$ and $C_o$ may be given by:

$$V_o = V_p \sin(\omega_0 t) = \frac{2V_{in}}{\pi} Q \sin(\omega_0 t) \qquad (9)$$

Finally the voltage induced across the receiving coil, $L_2$, may be given by:

$$V_{L2} = k \sqrt{\frac{L_2}{L_1}} \frac{2V_{in}}{\pi} Q \sin(\omega_0 t) \qquad (10)$$

The following are typical values for the various parameters:

$$L_1 = 1000\mu\text{H} \quad L_2 = 100\mu\text{H} \quad k = 0.1, \quad C_o = 2400\text{pF}, \quad R_o = 8\Omega \qquad (11)$$

Using these values we obtain:

$$Z_o = 645\Omega\,;\, f_o = 103\text{kHz}\,;\, Q = 81 \qquad (12)$$

$$I_o = \frac{5V}{645\Omega} \frac{2}{\pi} 81 \sin(2\pi 1.03 \times 10^5 t) = (400\text{mA})\sin(6.6 \times 10^5 t) \qquad (13)$$

$$V_o = \frac{2 \times 5V}{\pi} 81 \sin(6.6 \times 10^5 t) = (260\text{V})\sin(6.6 \times 10^5 t) \qquad (14)$$

$$V_{L2} = 0.1 \sqrt{\frac{100}{1000} \frac{2 \times 5V}{\pi} 81} \sin(\omega_0 t) = (8.1\text{V})\sin(6.6 \times 10^5 t) \qquad (15)$$

Finally, an input *LC* filter, $L_{in}$ and $C_{in}$, with a damping branch , $R_d$ and $C_d$, may be used to filter out the switching resonant current so that a smooth dc current is drawn from the 5 Vdc source.

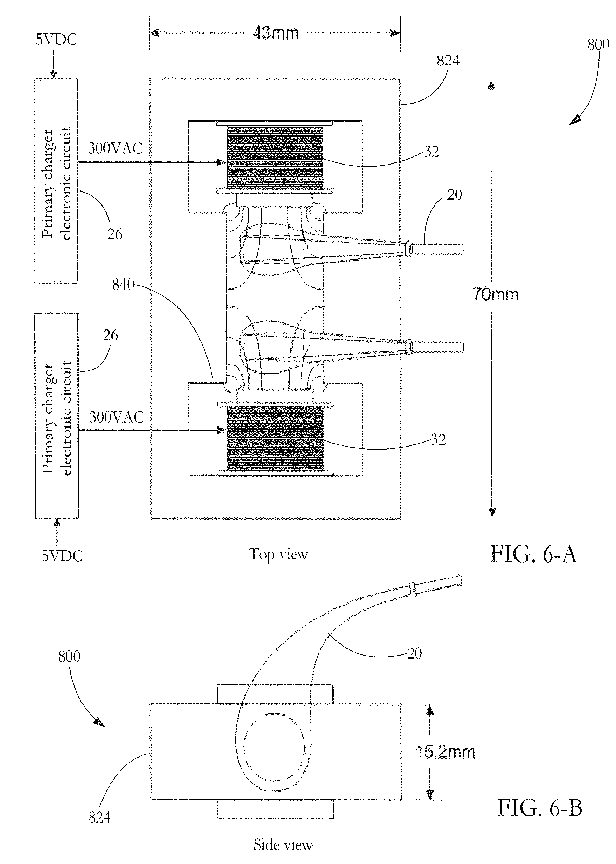

Figs. **6-A-B** show top and side views, respectively, of a wireless charging system **800** suitable for simultaneously charging two hearing aids **20,** according to some embodiments of the present invention. Many hearing aid users have two hearing aids, and would benefit from a dual charger such as the one shown in Figs. **6-A-B.**

A charger **824** includes two oppositely-facing primary (transmitter) inductors **32,** each configured to charge the battery within a corresponding hearing aid **20** placed in charger **824.** One or more common field-shaping lateral protrusions **840** extend along both hearing aids **20,** and serve to shape the charging magnetic fields generated by both transmitter inductors **32** as described above. Two longitudinal conductive protrusions extend within the charging chamber, and form the magnetic cores of primary inductors **32.** Charger **824** may use a common magnetic core but two independent primary charging circuits **26** in order to eliminate the loading effect of one side on the other. In principle both coils can either be connected in series or in parallel and driven by a single primary charging circuit. But, because the presence of a hearing aid in the gap loads the primary charger, the charging current may depend whether there is one hearing aid or two aids in the charger. When dual drivers **26** are used this interaction can be eliminated.

In some embodiments, the thickness of each hearing aid **20** takes about 50-60% of the longitudinal extent (vertical extent in Figs. **6-A-B**) of field-shaping lateral protrusions (legs) **840.** The adjacent four corners of the two longitudinal protrusions forming the cores of primary inductors **32** and the two lateral field-shaping protrusions **840** may be closely-spaced apart, e.g. within a few mm (e.g. 1-3 mm) of each other, in order to effectively to pull away the charging magnetic field laterally. The charging chamber may be kept as small as possible while still accommodating the hearing aid(s), since a larger charging gap may require stronger field sources, which may lead to higher power consumption and stronger electromagnetic interference.

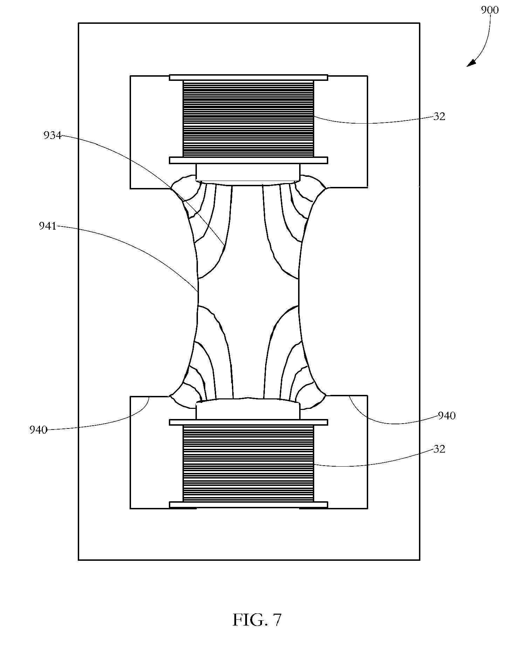

Fig. 7 shows an exemplary dual-hearing-aid charging system **900** having rounded field-shaping lateral protrusions **940** according to some embodiments of the present invention. The divergent magnetic fields shown in Figs. **1-B-C** and **6-A-B** are generated by the shape of the magnetic core **30** in which the lateral protrusions **40, 840** on either side of the large gap pull the magnetic fields away. The magnetic circuit shown in Figs. **1-B-C** and **6-A-B** may be made of standard ferrite parts which come in the form of squares, rectangles and cylinders. In some embodiments, a more optimal divergent field **934** can be produced if curvilinear edges **941** are used for four legs of the magnetic circuit as shown in Fig. **7.** At the same time, exemplary experimental units have shown the adequacy of the magnetic circuits shown in Figs. **1-B-C** and **6-A-B** in some embodiments.

Exemplary systems and methods as described above allow the reliable wireless charging of hearing aids or other miniature devices through an air gap, under tight spatial constraints. The restricted volume allowed for the reception of the transmitted power within these miniature devices benefits from the described magnetic circuits for laterally-shaping the magnetic field in the allowed volume without causing interference or damage to the device. Such damage may be caused by inductive heating of the battery.

Recognizing the weak coupling of a receiving coil inside a hearing aid device placed in a charging cradle, and a charging coil placed outside, the exemplary description above shows how a series resonant circuit can be formed from the loosely coupled coils and excited at its resonant frequency to overcome the weak coupling and obtain sufficient power transfer to charge the battery. Furthermore, because the resonant frequency depends on the relative position of the two coils and slight deviation of the excitation frequency from the resonant frequency can result in almost no power transfer, a feedback circuit with a voltage controlled oscillator may be used to lock-on to the resonant frequency of the series resonant circuit. In order to limit the induction to the receiving coil as much as possible without causing induction heating in the conductive casing of the battery or its chemical contents, the magnetic fields are shaped so that they are pulled out and away from the sides of the receiving coil immediately after they cross the area of the receiving coil. Finally, the excitation currents are kept low enough so that the escaped fields inside the battery do not cause significant heating or damage to the chemical composition.

Several practical constraints in some embodiments may lead to inherently a very low value of the coupling coefficient, *k*. First, the receiving coil ideally is small enough to fit inside the battery compartment of the hearing aid device and occupies a very small portion of the volume of the battery compartment in order to leave room for the battery. Second, the secondary coil is physically isolated from the primary coil and may not readily share a common ferrite core to obtain reasonable coupling to the primary. In fact, the secondary coil may be an air core formed by interconnecting spiral traces on a multilayer printed circuit board. Third, the dimensions of a physical configuration comprising a charging unit and a hearing aid device, containing the secondary coil, placed inside the charging unit constrain the distance between the secondary coil and any source of magnetic field, in the charging unit, that is comparable to the dimensions of the receiving coil. Thus, commonly the value of a coupling coefficient achievable through such an air gap is on the order of 0.1. If the power needed to charge a hearing aid battery is of the order of a few tens of milliwatts, an efficiency of a few percent will result in an input power of the order of one or two watts.

A legacy hearing aid configured to use standard-size zinc-air batteries may be equipped instead with an electronic battery as described above, placed inside the gap of a transformer-like primary charger magnetic circuit and charged by magnetic induction from an adjacent coil. Compared to inductive chargers used in electric toothbrushes, electric cars and charging plates for cell phone, the electronics and magnetic circuits described above are different at least because the transmitting and receiving coils in such applications are reasonably well coupled and the battery is not in inside the charging magnetic field. In contrast, an exemplary receiving coil as described above may be weakly coupled to the charging coil because it is a) on an air core, b) much smaller than the charging coil and c) comparatively at a significant distance from the charging coil. Also, the battery may be subject to induction heating if it is a short distance (e.g. 1 mm) away from the receiving coil and well inside the charging magnetic field.

The very weak coupling between the charging and receiving coils may require 300-to-600 Vac at ~100kHz be applied to the charging coil in order to induce 5-to-6V on the receiving coil. Such a high voltage can be readily obtained from a 5 Vdc source using a self-oscillating, high-$Q$ resonant circuit in which the resonant inductor is the charging coil itself.

Common hearing aids (HA) available presently today operate on single-use, zinc-air batteries that last between 5-7 days depending on usage and power consumption of user selected sophisticated functions provided by the HA (such as Bluetooth, etc.). The procedure of replacing a depleted battery with a new battery is quite awkward and represents a significant amount of frustration and challenge especially for the average age group of HA users. The ability to seamlessly recharge a standard (legacy) HA without the hassle of replacing the battery has long been a sought after capability by HA providers and users alike. Exemplary technology and systems as described above provide just such a capability. Using high-frequency alternating magnetic fields to transfer energy wirelessly, a primary charging coil located within a primary charger housing structure, transfers energy to a secondary receiving coil embedded in the HA rechargeable battery, using loosely coupled resonant circuits.

In some embodiments, an electronic battery as described above includes three subparts: a rechargeable battery chemistry system such as a 4.1 V or 4.2 V Li-ion chemistry or other rechargeable battery chemistries; an electronic printed circuit board, which may be called the Remote Charging Electronics (RCE), that accommodates an embedded receiving coil, a full wave rectifier, a Li-ion charging integrated circuit and a switching dc-to-dc converter with 1.1 V output; and a small standard-size battery casing that houses the rechargeable battery chemistry and RCE described above.

In some embodiments, the primary charger comprises two parts: a magnetic circuit with two primary charging coils and a fixed, large gap; and an electronic printed circuit board with an oscillator that drives the two primary charging coils, one for each hearing aid, in the magnetic circuit. The printed circuit board accepts 5 Vdc from a standard micro USB port and produces a high frequency, ~100 kHz, magnetic field inside the fixed gap in which one or two hearing aid devices, equipped with the electronic batter, are placed. The magnetic field in the gap induces a voltage in the embedded coil inside the Dynamic Battery which then energizes the electronic circuit that in turn charges the 4.1 V-4.2 V Li-ion battery.

Exemplary magnetic circuits as described above are designed so as to have the magnetic fields be mostly intercepted by the embedded inductor inside the RCE and not by the battery casing in order to prevent excessive heating in the battery caused by induction. The magnetic fields are pulled out and away from the sides of the receiving coil, after they cross the receiving coil, in order to limit the induction to the battery as much as possible and minimize induction heating in the conductive casing of the battery.

When the hearing aid is fully charged and removed from the gap, the Li-ion battery powers a switching dc-to-dc converter which converts the (4.1 or 4.2 volts of a Li-ion) battery voltage to an output voltage of 1.1 V needed to operate standard (legacy) hearing aid device that are designed to operate with zinc-air batteries, which operate at 1.1 volts.

A full form-fit-function prototype as described above was built and tested in the field using a legacy (Phonak) hearing aid device for over 10 weeks without degradation, indicating the compatibility of exemplary charging systems as described above with legacy hearing aid devices.

It will be clear to one skilled in the art that the above embodiments may be altered in many ways without departing from the scope of the invention. Accordingly, the scope of the invention should be determined by the following claims and their legal equivalents.

**Claims**

1.   A system comprising:

a remote battery charger (24, 824) comprising a transmitter inductor (32, L1) electrically connected to an external power source;

a rechargeable battery body (80) situated within a charging chamber (38) of the remote battery charger (24, 824); and

a receiver inductor (200, L2) electrically connected to the battery body (80) and situated between the transmitter inductor (32, L1) and the battery body (80), the receiver inductor (200, L2) being inductively coupled to the transmitter inductor (32, L1) through a generally-longitudinal air gap (36);

**characterized in that**

the remote battery charger (24, 824) comprises a set of lateral field-shaping protrusions (40, 840) being provided as legs of a magnetic core (30) and disposed laterally with respect to the receiver inductor (200, L2), the field-shaping protrusions (40, 840) being configured to serve as poles for directing a charging magnetic field (34) generated by the transmitter inductor (32, L1) away from a central axis of the transmitter inductor (32, L1) so as to decrease an inductive coupling of the transmitter inductor (32, L1) to the battery body (80).

2. The system of claim 1, wherein a hearing aid (20) comprises the rechargeable battery body (80) and the receiver inductor (200, L2), wherein the hearing aid (20) is removably situated within the charging chamber (38) of the remote battery charger (24, 824), and wherein the battery body (80) being disposed opposite the transmitter inductor (32, L1) relative to the receiver inductor (200, L2).

3. The system of claim 1 or 2, wherein the battery body (80) and a charging circuit (62, 600) comprising the receiver inductor (200, L2) are integrated together by a wrapping structure or assembly to form a rechargeable hearing aid battery.

4. The system of claim 1, 2 or 3, wherein a coupling coefficient characterizing an inductive coupling between the transmitter inductor (32, L1) and the receiver inductor (200, L2) has a value of less than 0.2, preferably approximately 0.1.

5. The system of any of the preceding claims, wherein the receiver inductor (200, L2) comprises a spiral trace formed along multiple layers (202) of a multilayer printed circuit board.

6. The system of any of the preceding claims, wherein a power transferred into the rechargeable battery body (80) through the receiver inductor (200, L2) is between 100 mW and 1 W.

7. The system of any of the preceding claims, wherein a frequency of the charging magnetic field (34) is between 100 kHz and 150 kHz, preferably about 120 kHz.

8. The system of any of the preceding claims 2 - 7, wherein the hearing aid (20) comprises a self-oscillating receiver circuit configured to lock onto a resonant frequency of a charging circuit comprising the transmitter inductor (32, L1) and the receiver inductor (200, L2).

9. The system of any of the preceding claims 2 - 8, wherein the remote battery charger (824) further comprises another transmitter inductor and another hearing aid, the transmitter inductor (32, L1) and the other transmitter inductor being positioned on opposite longitudinal sides of the set of field-shaping protrusions (840), each transmitter inductor (32, L1) being configured to charge a corresponding hearing aid (20).

10. The system of any of the preceding claims, wherein each of the field-shaping protrusions (40, 840) has a generally-curved surface.

11. The system of any of the preceding claims, wherein a positive terminal of the battery body faces the receiver inductor (200, L2).

12. A method comprising:

placing a rechargeable battery body (80) within a charging chamber (38) of a remote battery charger (24, 824), the remote battery charger (24, 824) comprising a transmitter inductor (32, L1) electrically connected to an external power source, the battery body (80) being electrically connected to a receiver inductor (200, L2) situated between the transmitter inductor (32, L1) and the battery body (80), the receiver inductor (200, L2) being inductively coupled to the transmitter inductor (32, L1) through a generally-longitudinal air gap (36); and charging the rechargeable battery body (80) by inductively coupling energy from the transmitter inductor (32, L1) to the receiver inductor (200, L2);

**characterized in that**

the remote battery charger (24, 824) comprises a set of lateral field-shaping protrusions (40, 840) being provided as legs of a magnetic core (30) and disposed laterally with respect to the receiver inductor (200, L2), the field-shaping protrusions (40, 840) serving as poles for directing a charging magnetic field (34) generated by the transmitter inductor (32, L1) away from a central axis of the transmitter inductor (32, L1) so as to decrease an inductive coupling of the transmitter inductor (32, L1) to the battery body (80).

13. The method of claim 12, wherein the rechargeable battery body (80) is placed within the charging chamber (38) of the remote battery charger (24, 824) by removably placing a hearing aid (20) inside the charging chamber (38) of the remote battery charger (24, 824), wherein the hearing aid (20) comprises the rechargeable battery body (80) and the receiver inductor (200, L2), and wherein the battery body (80) is disposed opposite the transmitter inductor (32, L1) relative to the receiver inductor (200, L2).

**Patentansprüche**

1. System, das umfasst:

ein Fernbatterieladegerät (24, 824) mit einem Senderinduktor (32, L1), der mit einer externen Leistungsquelle elektrisch verbunden ist;
einen wiederaufladbaren Batteriekörper (80), der sich innerhalb einer Aufladekammer (38) des Fernbatterieladegeräts (24, 824) befindet; und
einen Empfängerinduktor (200, L2), der mit dem Batteriekörper (80) elektrisch verbunden ist und sich zwischen dem Senderinduktor (32, L1) und dem Batteriekörper (80) befindet, wobei der Empfängerinduktor (200, L2) mit dem Senderinduktor (32, L1) durch einen im Allgemeinen longitudinalen Luftspalt (36) induktiv gekoppelt ist;

**dadurch gekennzeichnet, dass**

das Fernbatterieladegerät (24, 824) einen Satz von seitlichen Feldformungsvorsprüngen (40, 840) umfasst, die als Schenkel eines Magnetkerns (30) vorgesehen sind und in Bezug auf den Empfängerinduktor (200, L2) seitlich angeordnet sind, wobei die Feldformungsvorsprünge (40, 840) so ausgelegt sind, dass sie als Pole zum Richten eines Auflademagnetfeldes (34), das durch den Senderinduktor (32, L1) erzeugt wird, von einer Mittelachse des Senderinduktors (32, L1) weg dienen, um eine induktive Kopplung des Senderinduktors (32, L1) mit dem Batteriekörper (80) zu verringern.

2. System nach Anspruch 1, wobei eine Hörhilfe (20) den wiederaufladbaren Batteriekörper (80) und den Empfängerinduktor (200, L2) umfasst, wobei die Hörhilfe (20) sich entnehmbar innerhalb der Aufladekammer (38) des Fernbatterieladegeräts (24, 824) befindet, und wobei der Batteriekörper (80) entgegengesetzt zum Senderinduktor (32, L1) relativ zum Empfängerinduktor (200, L2) angeordnet ist.

3. System nach Anspruch 1 oder 2, wobei der Batteriekörper (80) und eine Aufladeschaltung (62, 600) mit dem Empfängerinduktor (200, L2) durch eine Umhüllungsstruktur oder -anordnung miteinander integriert sind, um eine wiederaufladbare Hörhilfebatterie zu bilden.

4. System nach Anspruch 1, 2 oder 3, wobei ein Kopplungskoeffizient, der eine induktive Kopplung zwischen dem Senderinduktor (32, L1) und dem Empfängerinduktor (200, L2) charakterisiert, einen Wert von weniger als 0,2, vorzugsweise ungefähr 0,1, aufweist.

5. System nach einem der vorangehenden Ansprüche, wobei der Empfängerinduktor (200, L2) eine spiralförmige Leiterbahn umfasst, die entlang mehrerer Schichten (202) einer mehrlagigen Leiterplatte ausgebildet ist.

6. System nach einem der vorangehenden Ansprüche, wobei eine Leistung, die in den wiederaufladbaren Batteriekörper (80) durch den Empfängerinduktor (200, L2) übertragen wird, zwischen 100 mW und 1 W liegt.

**7.** System nach einem der vorangehenden Ansprüche, wobei eine Frequenz des Auflademagnetfeldes (34) zwischen 100 kHz und 150 kHz, vorzugsweise etwa 120 kHz ist.

**8.** System nach einem der vorangehenden Ansprüche 2-7, wobei die Hörhilfe (20) eine selbstschwingende Empfängerschaltung umfasst, die dazu ausgelegt ist, sich auf eine Resonanzfrequenz einer Aufladeschaltung mit dem Senderinduktor (32, L1) und dem Empfängerinduktor (200, L2) einzustellen.

**9.** System nach einem der vorangehenden Ansprüche 2-8, wobei das Fernbatterieladegerät (824) ferner einen weiteren Senderinduktor und eine weitere Hörhilfe umfasst, wobei der Senderinduktor (32, L1) und der weitere Senderinduktor auf entgegengesetzten Längsseiten des Satzes von Feldformungsvorsprüngen (840) angeordnet sind, wobei jeder Senderinduktor (32, L1) dazu ausgelegt ist, eine entsprechende Hörhilfe (20) aufzuladen.

**10.** System nach einem der vorangehenden Ansprüche, wobei jeder der Feldformungsvorsprünge (40, 840) eine im Allgemeinen gekrümmte Oberfläche aufweist.

**11.** System nach einem der vorangehenden Ansprüche, wobei ein positiver Anschluss des Batteriekörpers dem Empfängerinduktor (200, L2) zugewandt ist.

**12.** Verfahren, das umfasst:

Anordnen eines wiederaufladbaren Batteriekörpers (80) innerhalb einer Aufladekammer (38) eines Fernbatterieladegeräts (24, 824), wobei das Fernbatterieladegerät (24, 824) einen Senderinduktor (32, L1) umfasst, der mit einer externen Leistungsquelle elektrisch verbunden ist, wobei der Batteriekörper (80) mit einem Empfängerinduktor (200, L2) elektrisch verbunden ist, der sich zwischen dem Senderinduktor (32, L1) und dem Batteriekörper (80) befindet, wobei der Empfängerinduktor (200, L2) mit dem Senderinduktor (32, L1) durch einen im Allgemeinen longitudinalen Luftspalt (36) induktiv gekoppelt wird; und
Aufladen des wiederaufladbaren Batteriekörpers (80) durch induktives Koppeln von Energie vom Senderinduktor (32, L1) mit dem Empfängerinduktor (200, L2);

**dadurch gekennzeichnet, dass**

das Fernbatterieladegerät (24, 824) einen Satz von seitlichen Feldformungsvorsprüngen (40, 840) umfasst, die als Schenkel eines Magnetkerns (30) vorgesehen sind und in Bezug auf den Empfängerinduktor (200, L2) seitlich angeordnet sind, wobei die Feldformungsvorsprünge (40, 840) als Pole zum Richten eines Auflademagnetfeldes (34), das durch den Senderinduktor (32, L1) erzeugt wird, von einer Mittelachse des Senderinduktors (32, L1) weg dienen, um eine induktive Kopplung des Senderinduktors (32, L1) mit dem Batteriekörper (80) zu verringern.

**13.** Verfahren nach Anspruch 12, wobei der wiederaufladbare Batteriekörper (80) innerhalb der Aufladekammer (38) des Fernbatterieladegeräts (24, 824) durch entnehmbares Anordnen einer Hörhilfe (20) innerhalb der Aufladekammer (38) des Fernbatterieladegeräts (24, 824) angeordnet wird, wobei die Hörhilfe (20) den wiederaufladbaren Batteriekörper (80) und den Empfängerinduktor (200, L2) umfasst, und wobei der Batteriekörper (80) entgegengesetzt zum Senderinduktor (32, L1) relativ zum Empfängerinduktor (200, L2) angeordnet wird.

**Revendications**

**1.** Système comprenant :

un chargeur de batterie à distance (24, 824) comprenant une inductance émettrice (32, L1) reliée électriquement à une source d'énergie externe ;
un corps de batterie rechargeable (80) se trouvant à l'intérieur d'une chambre de charge (38) du chargeur de batterie à distance (24, 824) ; et
une inductance réceptrice (200, L2) reliée électriquement au corps de batterie (80) et se trouvant entre l'inductance émettrice (32, L1) et le corps de batterie (80), l'inductance réceptrice (200, L2) étant couplée de manière inductive à l'inductance émettrice (32, L1) au travers d'un entrefer (36) globalement longitudinal ;

**caractérisé en ce que**

le chargeur de batterie à distance (24, 824) comprend un ensemble de protubérances (40, 840) de mise en forme du champ latérales réalisées sous la forme de branches d'un noyau magnétique (30) et disposées latéralement par rapport à l'inductance réceptrice (200, L2), les protubérances (40, 840) de mise en forme du champ étant configurées pour faire office de perches servant à diriger un champ magnétique de charge (34) généré par l'inductance émettrice (32, L1) à l'écart d'un axe central de l'inductance émettrice (32, L1) de manière à diminuer un couplage inductif de l'inductance émettrice (32, L1) avec le corps de batterie (80).

2. Système selon la revendication 1, une aide auditive (20) comprenant le corps de batterie rechargeable (80) et l'inductance réceptrice (200, L2), l'aide auditive (20) étant située de manière amovible à l'intérieur de la chambre de charge (38) du chargeur de batterie à distance (24, 824), et le corps de batterie (80) étant disposé à l'opposé de l'inductance émettrice (32, L1) par rapport à l'inductance réceptrice (200, L2).

3. Système selon la revendication 1 ou 2, le corps de batterie (80) et un circuit de charge (62, 600) comprenant l'inductance réceptrice (200, L2) étant intégrés ensemble par une structure ou un ensemble enveloppant pour former une batterie rechargeable d'aide auditive.

4. Système selon la revendication 1, 2 ou 3, un coefficient de couplage caractérisant un couplage inductif entre l'inductance émettrice (32, L1) et l'inductance réceptrice (200, L2) ayant une valeur inférieure à 0,2, de préférence approximativement égale à 0,1.

5. Système selon l'une quelconque des revendications précédentes, l'inductance réceptrice (200, L2) comprenant un piste en spirale formée le long de multiples couches (202) d'un circuit imprimé multicouche.

6. Système selon l'une quelconque des revendications précédentes, une énergie transférée dans le corps de batterie rechargeable (80) à travers l'inductance réceptrice (200, L2) étant comprise entre 100 mW et 1 W.

7. Système selon l'une quelconque des revendications précédentes, une fréquence du champ magnétique de charge (34) étant comprise entre 100 kHz et 150 kHz, de préférence égale à environ 120 kHz.

8. Système selon l'une quelconque des revendications précédentes 2 à 7, l'aide auditive (20) comprenant un circuit récepteur auto-oscillant configuré pour se verrouiller à une fréquence de résonance d'un circuit de charge comprenant l'inductance émettrice (32, L1) et l'inductance réceptrice (200, L2).

9. Système selon l'une quelconque des revendications précédentes 2 à 8, le chargeur de batterie à distance (824) comprenant en outre une autre inductance émettrice et une autre aide auditive, l'inductance émettrice (32, L1) et l'autre inductance émettrice étant positionnées sur des côtés longitudinaux opposés de l'ensemble de protubérances (840) de mise en forme du champ, chaque inductance émettrice (32, L1) étant configurée pour charger une aide auditive (20) correspondante.

10. Système selon l'une quelconque des revendications précédentes, chacune des protubérances (40, 840) de mise en forme du champ possédant une surface globalement courbe.

11. Système selon l'une quelconque des revendications précédentes, une borne positive du corps de batterie faisant face à l'inductance réceptrice (200, L2).

12. Procédé comprenant :

la mise en place d'un corps de batterie rechargeable (80) à l'intérieur d'une chambre de charge (38) d'un chargeur de batterie à distance (24, 824), le chargeur de batterie à distance (24, 824) comprenant une inductance émettrice (32, L1) reliée électriquement à une source d'énergie externe, le corps de batterie (80) étant relié électriquement à une inductance réceptrice (200, L2) se trouvant entre l'inductance émettrice (32, L1) et le corps de batterie (80), l'inductance réceptrice (200, L2) étant couplée de manière inductive à l'inductance émettrice (32, L1) au travers d'un entrefer (36) globalement longitudinal ; et
la charge du corps de batterie rechargeable (80) par couplage inductif d'énergie depuis l'inductance émettrice (32, L1) vers l'inductance réceptrice (200, L2) ;

**caractérisé en ce que**

le chargeur de batterie à distance (24, 824) comprend un ensemble de protubérances (40, 840) de mise en forme du champ latérales réalisées sous la forme de branches d'un noyau magnétique (30) et disposées latéralement par rapport à l'inductance réceptrice (200, L2), les protubérances (40, 840) de mise en forme du champ faisant office de perches servant à diriger un champ magnétique de charge (34) généré par l'inductance émettrice (32, L1) à l'écart d'un axe central de l'inductance émettrice (32, L1) de manière à diminuer un couplage inductif de l'inductance émettrice (32, L1) avec le corps de batterie (80).

13. Procédé selon la revendication 12, le corps de batterie (80) rechargeable étant placé à l'intérieur de la chambre de charge (38) du chargeur de batterie à distance (24, 824) en plaçant de manière amovible une aide auditive (20) à l'intérieur de la chambre de charge (38) du chargeur de batterie à distance (24, 824), l'aide auditive (20) comprenant le corps de batterie rechargeable (80) et l'inductance réceptrice (200, L2), et le corps de batterie (80) étant disposé à l'opposé de l'inductance émettrice (32, L1) par rapport à l'inductance réceptrice (200, L2).

20

HA

Battery compartment

22

Side view

**FIG. 1-A**

Top view

24

5VDC

40

38

24

26

Primary charger electronic circuit

Gap 36

B-field 34

coil (L) 32

300VAC

Side view

30

**FIG. 1-B**

Top view

5VDC

39

50

50

20

20

Hearing aid

Primary charger electronic circuit

24

Gap 36

coil (L) 32

300VAC

39

Side view

Top view

**FIG. 1-C**

B-field 34

68

Charge

Discharge

Electronics & embedded coil PCB 62

FIG. 2-A

External negative terminal 60

Common 64

Battery 80

External positive terminal 66

(a)

B-field 34

Charge/discharge

PCB for electronics and embedded coil 62

Battery 80

68

FIG. 2-B

External positive terminal 166

82

Common 164

(b)

FIG. 3-A

FIG. 3-B

FIG. 4

EP 2 867 976 B1

FIG. 5-A

19

FIG. 5-B

FIG. 5-C

5VDC

43mm

824

800

Primary charger electronic circuit

300VAC

32

26

20

840

26

70mm

Primary charger electronic circuit

300VAC

32

5VDC

Top view

FIG. 6-A

800

20

824

15.2mm

FIG. 6-B

Side view

FIG. 7

**EP 2 867 976 B1**

**REFERENCES CITED IN THE DESCRIPTION**

**Patent documents cited in the description**

- EP 2375534 A1
- EP 2093857 A2